(19) Europäisches Patentamt / European Patent Office / Office européen des brevets

(11) **EP 4 283 543 B1**

(12) **EUROPEAN PATENT SPECIFICATION**

(45) Date of publication and mention
of the grant of the patent:
**07.08.2024 Bulletin 2024/32**

(21) Application number: **22214848.8**

(22) Date of filing: **20.12.2022**

(51) International Patent Classification (IPC):
**G06Q 10/0639** (2023.01)

(52) Cooperative Patent Classification (CPC):
**G06Q 10/0639**

(54) **METHOD AND SYSTEM FOR BLOCKCHAIN MONITORING**

VERFAHREN UND SYSTEM ZUR BLOCKCHAIN-ÜBERWACHUNG

PROCÉDÉ ET SYSTÈME DE SURVEILLANCE DE CHAÎNE DE BLOCS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **23.05.2022 IN 202221029544**

(43) Date of publication of application:
**29.11.2023 Bulletin 2023/48**

(73) Proprietor: **Tata Consultancy Services Limited
Maharashtra (IN)**

(72) Inventors:
• **RAMGOPAL, Vivekanand**
**600017 Chennai - Tamil Nadu (IN)**
• **RAMAN, Malini**
**600017 Chennai - Tamil Nadu (IN)**
• **JEREMIAH, Namitha**
**600017 Chennai - Tamil Nadu (IN)**
• **LAKSHMANAN, Ashishkumar**
**682042 Kochi - Kerala (IN)**

(74) Representative: **Goddar, Heinz J.
Boehmert & Boehmert
Anwaltspartnerschaft mbB
Pettenkoferstrasse 22
80336 München (DE)**

(56) References cited:
**WO-A1-2017/214320    US-A1- 2020 026 502
US-A1- 2021 295 223**

• **MADHAVAN R ET AL: "Performance metrics for intelligent systems (PERMIS) workshop NIST SP 1090", 31 December 2008 (2008-12-31), pages 1 - 337, XP061056961, Retrieved from the Internet <URL:https://nvlpubs.nist.gov/nistpubs/Legacy/ SP/nistspecialpublication1090.pdf> [retrieved on 20081231], DOI: 10.6028/NIST.SP.1090**
• **JACOB BRUCE: "In Praise of Memory Systems: Cache, DRAM, Disk", 1 January 2008 (2008-01-01), XP055785133, ISBN: 978-0-12-379751-3, Retrieved from the Internet <URL:https://www.e-reading-lib.com/bookreade r.php/138837/bruce-ng-jacob-memory-systems- cache-dram-disk.pdf> [retrieved on 20210312]**
• **CHEN KAIXUAN ET AL: "11 Deep Learning for Sensor-based Human Activity Recognition: Overview, Challenges and Opportunities", J. ACM ARTICLE, vol. 37, no. 111, 22 January 2021 (2021-01-22), pages 1 - 40, XP055894387, DOI: 10.1145/1122445.1122456**

EP 4 283 543 B1

**Description**

CROSS-REFERENCE TO RELATED APPLICATIONS AND PRIORITY

The present application claims priority to Indian application no. 202221029544, filed on May 23, 2022.

TECHNICAL FIELD

The disclosure herein generally relates to user performance evaluation, and, more particularly, to a method and system for user performance evaluation based on tracked user actions.

BACKGROUND

Performance evaluation is critical in assessing whether a user, who has been assigned certain tasks, is performing/executing the tasks in an efficient manner. For example, consider that a task involves a sequence of steps. A user who is executing the task may be required to follow the sequence in the same order. However, the user, by mistake or maybe due to ignorance, may deviate from the sequence, which may or may not be productive. Tracking such deviations is important to ensure that the user follows the sequence, especially if the deviation results in inefficiency.

Existing tools that measure productivity heavily rely on metrics such as lines of code, function points and user story points. These tools rely on compiled code as an input in order to compute these metrics. For a rapidly evolving technology such as blockchain, this does not provide an accurate measurement of development productivity as toolkits available in the market tend to be specific to the underlying platform.

Document US2020/026502 discloses a computer system for assessing the efficiency of a graphic user interface based on user input and tracking the user through the use of the interface.

Embodiments of the present disclosure present technological improvements as solutions to one or more of the above-mentioned technical problems recognized by the inventors in conventional systems. For example, in one embodiment, a processor implemented method of user performance evaluation is provided. The method includes tracking, via one or more hardware processors, a plurality of user actions when a user is engaged in an activity, wherein the plurality of user actions comprise navigation within an application in which the activity is being performed, and execution of one or more functions of the application. Further, a state change representing a sequence of traversal of the plurality of user actions is determined via the one or more hardware processors, wherein the state change is identified when the plurality of user actions is executed by the user. Further, an extent of deviation of the determined state change in comparison with a reference state change of the application is determined via the one or more hardware processors. Determining the extent of deviation includes the following steps. Initially, the sequence of traversal of the plurality of user actions corresponding to the determined state change is compared with a reference sequence of traversal of user actions corresponding to the reference state change. Further, a user efficiency matrix is generated, wherein the user efficiency matrix represents a percentage similarity of the sequence of traversal of the plurality of user actions corresponding to the determined state change with the reference sequence of traversal of the user actions corresponding to the reference state change. Further, a user inefficiency matrix is generated, wherein the user inefficiency matrix represents a) a percentage dissimilarity of the sequence of traversal of the plurality of user actions corresponding to the determined state change with the reference sequence of traversal of the user actions corresponding to the reference state change, and b) instances of the user activity resulting in a failure condition. The extent of deviation is represented in terms of the efficiency matrix and the inefficiency matrix. After determining the extent of deviation, a user performance score is calculated via the one or more hardware processors, as a function of the user efficiency matrix and the user inefficiency matrix. Further, a performance level of the user is determined based on the calculated user performance score, via the one or more hardware processors.

In another aspect, a system for user performance evaluation is provided. The system includes one or more hardware processors, a communication interface, and a memory storing a plurality of instructions, wherein the plurality of instructions when executed, cause the one or more hardware processors to initially track a plurality of user actions when a user is engaged in an activity, wherein the plurality of user actions comprise navigation within an application in which the activity is being performed, and execution of one or more functions of the application. Further, a state change representing a sequence of traversal of the plurality of user actions is determined via the one or more hardware processors, wherein the state change is identified when the plurality of user actions is executed by the user. Further, an extent of deviation of the determined state change in comparison with a reference state change of the application is determined via the one or more hardware processors. Determining the extent of deviation includes the following steps. Initially, the sequence of traversal of the plurality of user actions corresponding to the determined state change is compared with a reference sequence of traversal of user actions corresponding to the reference state change. Further, a user efficiency matrix is generated, wherein the user efficiency matrix represents a percentage similarity of the sequence of traversal of the plurality of user actions corresponding to the determined state change with the reference sequence of traversal of the user actions corresponding to the reference state change. Further, a user inefficiency matrix is generated, wherein the user inefficiency matrix represents a) a percentage dissimilarity of the sequence of traversal of the plurality of user actions corresponding to the determined state change with the reference sequence of traversal of the user actions corresponding to the reference state change, and b) instances of the user activity resulting in a failure condition. The extent of deviation is represented in terms of the efficiency matrix and the inefficiency matrix. After determining the extent of deviation, a user performance score is calculated via the one or more hardware processors, as a function of the user efficiency matrix and the user inefficiency matrix. Further, a performance level of the user is determined based on the calculated user performance score, via the one or more hardware processors.

In yet another aspect, a non-transitory computer readable medium for user performance evaluation is provided. The non-transitory computer readable medium includes a plurality of instructions which when executed cause the following steps for the user performance evaluation.

It is to be understood that both the foregoing general description and the following detailed description are exemplary and explanatory only and are not restrictive of the invention, as claimed. Initially a plurality of user actions are tracked when a user is engaged in an activity, wherein the plurality of user actions comprise navigation within an application in which the activity is being performed, and execution of one or more functions of the application. Further, a state change representing a sequence of traversal of the plurality of user actions is determined via the one or more hardware processors, wherein the state change is identified when the plurality of user actions is executed by the user. Further, an extent of deviation of the determined state change in comparison with a reference state change of the application is determined via the one or more hardware processors. Determining the extent of deviation includes the following steps. Initially, the sequence of traversal of the plurality of user actions corresponding to the determined state change is compared with a reference sequence of traversal of user actions corresponding to the reference state change. Further, a user efficiency matrix is generated, wherein the user efficiency matrix represents a percentage similarity of the sequence of traversal of the plurality of user actions corresponding to the determined state change with the reference sequence of traversal of the user actions corresponding to the reference state change. Further, a user inefficiency matrix is generated, wherein the user inefficiency matrix represents a) a percentage dissimilarity of the sequence of traversal of the plurality of user actions corresponding to the determined state change with the reference sequence of traversal of the user actions corresponding to the reference state change, and b) instances of the user activity resulting in a failure condition. The extent of deviation is represented in terms of the efficiency matrix and the inefficiency matrix. After determining the extent of deviation, a user performance score is calculated via the one or more hardware processors, as a function of the user efficiency matrix and the user inefficiency matrix. Further, a performance level of the user is determined based on the calculated user performance score, via the one or more hardware processors.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for user performance evaluation, according to some embodiments of the present disclosure.
FIGS. 2A and 2B (collectively referred to as FIG. 2) is a flow diagram depicting steps involved in the process of the user performance evaluation being performed by the system of FIG. 1, according to some embodiments of the present disclosure.
FIG. 3 illustrates a comparison of productivity details of a first user and a second user, based on the performance level determined by the system of FIG. 1, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Existing systems being used for user performance evaluation and for measuring productivity heavily rely on metrics such as lines of code, function points and user story points. These tools rely on compiled code as an input in order to compute these metrics. For a rapidly evolving technology such as blockchain, this does not provide an accurate measurement of development productivity as toolkits available in the market tend to be specific to the underlying platform.

Method and system disclosed herein facilitate user performance evaluation by tracking user actions while the user is engaged in an activity. The system generates an efficiency matrix and an inefficiency matrix based on the user actions, and further calculates a user performance score indicating/representing a performance level of the user.

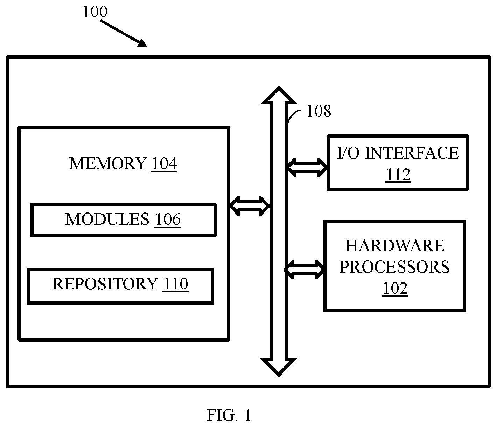

Referring now to the drawings, and more particularly to FIG. 1 through FIG. 3, where similar reference characters denote corresponding features consistently throughout the figures, there are shown preferred embodiments and these embodiments are described in the context of the following exemplary system and/or method.

FIG. 1 illustrates an exemplary system for user performance evaluation, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the user performance evaluation, and comparison being performed by the system 100. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the user performance evaluation.

The data repository (or repository) 110 may include a plurality of abstracted piece of code for refinement and data that is processed, received, or generated as a result of the execution of the plurality of modules in the module(s) 106.

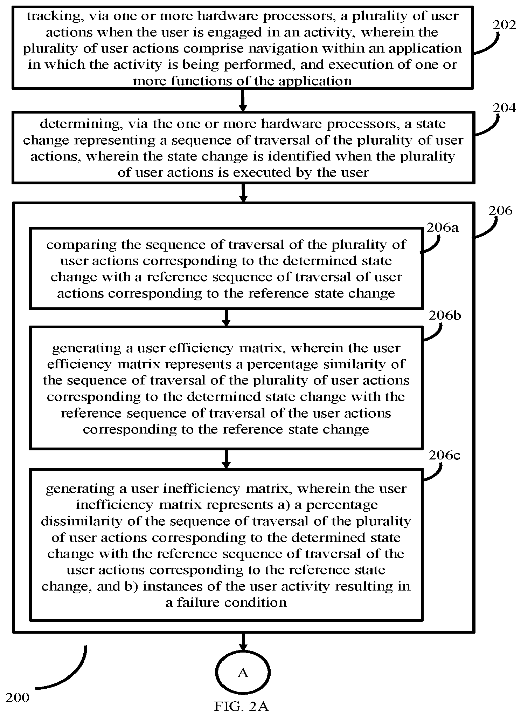

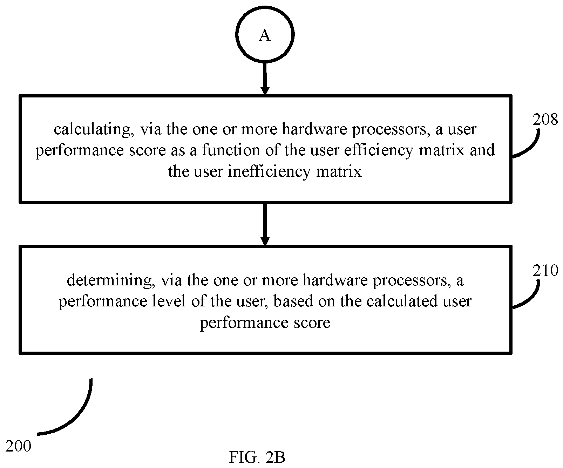

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagram FIG. 2.

FIGS. 2A and 2B (collectively referred to as FIG. 2) is a flow diagram depicting steps involved in the process of the user performance evaluation being performed by the system of FIG. 1, according to some embodiments of the present disclosure.

At step 202 of method 200, the system 100 tracks, via the one or more hardware processors 102, a plurality of user actions when the user is engaged in an activity, wherein the plurality of user actions comprise navigation within an application in which the activity is being performed, and execution of one or more functions of the application. In various embodiments, the activity at different instances may be associated different applications. For example, if the application supports application/software development, the activity may be coding, testing and so on, and the actions may be the user opening a coding/testing interface, compiling codes, executing codes, verifying results, switching between different interfaces and so on. All such actions, and sequence of the actions are tracked as and when they are performed/executed by the user, and are recorded. The system 100 may use any suitable mechanism for tracking the user action(s). For example, the tracking may involve mouse pointer tracking, recording keystrokes and so on. While the user is engaged in the activity, time between starting and ending of the activity at a stretch maybe considered as a session, and the system 100 maybe configured to record data section-wise.

Further, at step 204 of the method 200, the one or more hardware processors 102 of the system 100 are configured to determine a state change representing a sequence of traversal of the plurality of user actions, wherein the state change is identified when the plurality of user actions is executed by the user. For example, when the developmental and testing activities are considered, the state change may refer to switching between development interface and testing interface.

Further, at step 206 of the method 200, the system 100 determines via the one or more hardware processors, extent of deviation of the determined state change in comparison with a reference state change of the application. Various steps in determining the extent of deviation are depicted in steps 206a through 206c. At step 206a, the system 100 compares the sequence of traversal of the plurality of user actions corresponding to the determined state change with a reference sequence of traversal of user actions corresponding to the reference state change. At step 206b, the system 100 generates a user efficiency matrix, wherein the user efficiency matrix represents a percentage similarity of the sequence of traversal of the plurality of user actions corresponding to the determined state change with the reference sequence of traversal of the user actions corresponding to the reference state change. Further, at step 206c, the system 100 generates a user inefficiency matrix, wherein the user inefficiency matrix represents a) a percentage dissimilarity of the sequence of traversal of the plurality of user actions corresponding to the determined state change with the reference sequence of traversal of the user actions corresponding to the reference state change, and b) instances of the user activity resulting in a failure condition. The term "failure condition" may refer to a compilation failure, a security vulnerability issue, and/or other similar issues with build, deployment, unit testing phase and so on.

For example, consider that one developmental activity in an application deals with the state change from A to B, and a standard sequence of traversal is defined as $A \rightarrow A1 \rightarrow A2 \rightarrow A3 \rightarrow A4 \rightarrow B$. Now, if the user has been able to find a more optimal way of implementing the same state change from A to B, using a sequence $A \rightarrow A3 \rightarrow A4 \rightarrow B$, that means the state change has been achieved with less number of actions and intermediate steps in comparison with the standard sequence of traversal. The system 100 may be configured in such a way that a) an exact match of the determined sequence of traversal with the standard sequence of traversal, and b) a more optimal approach (i.e. the determined sequence of traversal having less number of steps than in the standard sequence of traversal), as being efficient actions, and corresponding state change(s) gets added to the user efficiency matrix. However, consider that due to mistakes/error(s) made, the sequence of traversal executed by the user is $A \rightarrow A1 \rightarrow A2 \rightarrow A3 \rightarrow A4 \rightarrow A1 \rightarrow A4 \rightarrow B$. In this case, the number of steps in the determined sequence of traversal is higher than that in the standard sequence of traversal, and hence the system 100 may consider this sequence of traversal as being inefficient, and corresponding state change(s) gets added to the user inefficiency matrix.

Further, at step 208 of the method 200, the system 100 calculates, via the one or more hardware processors, a user performance score as a function of the user efficiency matrix and the user inefficiency matrix. The system 100 may be configured to award/assign a better score for the state changes in the user efficiency matrix, and lower score for the state changes in the user inefficiency matrix. In an embodiment, the score for the actions in the user efficiency matrix is calculated as: using equation (1).

$$2 + (\text{total number of state changes / number of state changes in efficiency matrix}) -- (1)$$

For example no. of state changes expected = 5
User completed the action in 3 steps
Score is calculated as 2+ 5/3 = 3.6

If user follows exact same steps as in predefined sequence, then score is 2+ 5/5 = 3 i.e. when a user completes the task in less number of steps, it would indicate that the user is more efficient in comparison with another user who followed the pre-defined sequence, hence gets a better score.

Similarly the score for the actions in the user inefficiency matrix is calculated using equation (2).

$$2- (\text{total number of state changes / number of state changes in the inefficiency matrix})$$

$$-- (2)$$

Further the user performance score is calculated as average of the score calculated from the efficiency matrix and from the inefficiency matrix. Further, at step 210 of the method 200, the system 100 determines, via the one or more hardware processors 102, a performance level of the user, based on the calculated user performance score. In an embodiment, the system 100 may store in an associated database, mapping between different values of the user performance score and corresponding performance level, as a reference data. For example, consider the Table 1 below:

Table 1

| User performance score | Performance level |
|---|---|
| 0-5 | Novice |
| 5-7 | Expert |
| 7-10 | Master |

Using the reference data and the determined user performance score, the system 100 determines the performance level of the user. Information on the determined performance level may be then used by the system 100 for various applications. For example, the system 100 may use this information as training data to generate a data model which maybe further used for triggering corrective actions, such as but not limited to, enabling nudges to alert the user when needed. The determined performance level of the user may also serve as input for resource and project planning.

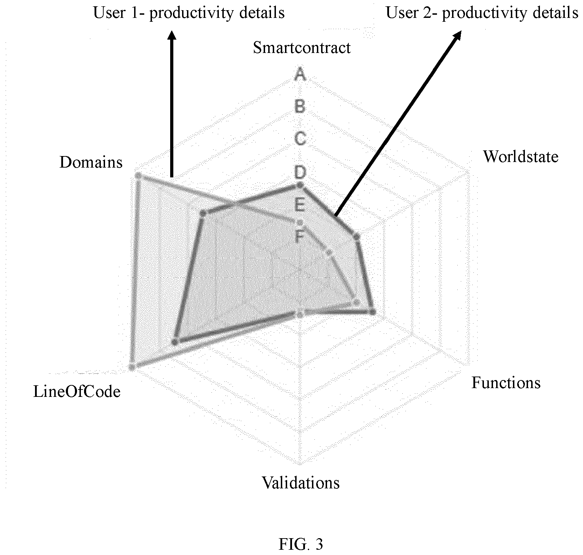

The system 100 may determine performance level (alternately referred to as 'productivity level') of different users using the method 200. Further, the system 100 may provide a suitable interface to compare performance of different users (maybe otherwise referred to as 'peers'), in terms of different attributes, similar to that in FIG. 3.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of user performance level evaluation. The embodiment, thus provides a method and system to determine a user performance score as a function of an efficiency matrix and an inefficiency matrix generated by monitoring user actions while the user is engaged in an activity. Moreover, the embodiments herein further provides a mechanism of determining performance level of the user based on the determined user performance score.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with disclosed embodiments in accordance with the scope of the appended claims.

## Claims

1. A processor implemented method (200) of user performance evaluation, comprising:

    tracking (202), via one or more hardware processors, a plurality of user actions when a user is engaged in an activity, wherein the plurality of user actions comprise navigation within an application in which the activity is being performed, and execution of one or more functions of the application; determining (204), via the one or more hardware processors, a state change representing a sequence of traversal of the plurality of user actions, wherein the state change is identified when the plurality of user actions is executed by the user;
    determining (206), via the one or more hardware processors, extent of deviation of the determined state change in comparison with a reference state change of the application, comprising:

        comparing (206a) the sequence of traversal of the plurality of user actions corresponding to the determined state change with a reference sequence of traversal of user actions corresponding to the reference state change;
        generating (206b) a user efficiency matrix, wherein the user efficiency matrix represents a percentage similarity of the sequence of traversal of the plurality of user actions corresponding to the determined state change with the reference sequence of traversal of the user actions corresponding to the reference state change; and
        generating (206c) a user inefficiency matrix, wherein the user inefficiency matrix represents a) a percentage dissimilarity of the sequence of traversal of the plurality of user actions corresponding to the determined state change with the reference sequence of traversal of the user actions corresponding to the reference state change, and b) instances of the user activity resulting in a failure condition;

    calculating (208), via the one or more hardware processors, a user performance score as a function of the user efficiency matrix and the user inefficiency matrix; and
    determining (210), via the one or more hardware processors, a performance level of the user, based on the calculated user performance score.

2. The method of claim 1, wherein result of each of the plurality of user actions associated with the determined state change represents a state.

3. The method of claim 2, wherein the determined state change is identified as an efficient state change if number of states in the determined state change is less than or equal to number of states in the reference state change.

4. The method of claim 2, wherein the determined state change is identified as an inefficient state change if number of states in the determined state change is exceeding number of states in the reference state change.

5. The method of claim 1, wherein a graphical representation of the determined performance level of the user in comparison with performance level of one or more peers is generated.

6. A system (100) for user performance evaluation, comprising:

    one or more hardware processors (102);

a communication interface (112); and
a memory (104) storing a plurality of instructions, wherein the plurality of instructions when executed, cause the one or more hardware processors to:

track a plurality of user actions when a user is engaged in an activity, wherein the plurality of user actions comprise navigation within an application in which the activity is being performed, and execution of one or more functions of the application;

determine a state change representing a sequence of traversal of the plurality of user actions, wherein the state change is identified when the plurality of user actions is executed by the user;

determine extent of deviation of the determined state change in comparison with a reference state change of the application, by:

comparing the sequence of traversal of the plurality of user actions corresponding to the determined state change with a reference sequence of traversal of user actions corresponding to the reference state change;

generating a user efficiency matrix, wherein the user efficiency matrix represents a percentage similarity of the sequence of traversal of the plurality of user actions corresponding to the determined state change with the reference sequence of traversal of the user actions corresponding to the reference state change; and

generating a user inefficiency matrix, wherein the user inefficiency matrix represents a) a percentage dissimilarity of the sequence of traversal of the plurality of user actions corresponding to the determined state change with the reference sequence of traversal of the user actions corresponding to the reference state change, and b) instances of the user activity resulting in a failure condition;

calculate a user performance score as a function of the user efficiency matrix and the user inefficiency matrix; and

determine a performance level of the user, based on the calculated user performance score.

7. The system as claimed in claim 6, wherein result of each of the plurality of user actions associated with the determined state change represents a state.

8. The system as claimed in claim 7, wherein the one or more hardware processors are configured to identify the determined state change as an efficient state change if number of states in the determined state change is less than or equal to the number of states in the reference state change.

9. The system as claimed in claim 7, wherein the one or more hardware processors are configured to identify the determined state change as an inefficient state change if number of states in the determined state change is exceeding number of states in the reference state change.

10. The system as claimed in claim 6, wherein the one or more hardware processors are configured to generate a graphical representation of the determined performance level of the user in comparison with performance level of one or more peers.

11. One or more non-transitory machine-readable information storage mediums comprising one or more instructions which when executed by one or more hardware processors cause:

tracking a plurality of user actions when a user is engaged in an activity, wherein the plurality of user actions comprise navigation within an application in which the activity is being performed, and execution of one or more functions of the application;

determining a state change representing a sequence of traversal of the plurality of user actions, wherein the state change is identified when the plurality of user actions is executed by the user;

determining extent of deviation of the determined state change in comparison with a reference state change of the application, comprising:

comparing the sequence of traversal of the plurality of user actions corresponding to the determined state change with a reference sequence of traversal of user actions corresponding to the reference state change;

generating a user efficiency matrix, wherein the user efficiency matrix represents a percentage similarity of the sequence of traversal of the plurality of user actions corresponding to the determined state change with the reference sequence of traversal of the user actions corresponding to the reference state change; and generating a user inefficiency matrix, wherein the user inefficiency matrix represents a) a percentage dissimilarity of the sequence of traversal of the plurality of user actions corresponding to the determined state change with the reference sequence of traversal of the user actions corresponding to the reference state change, and b) instances of the user activity resulting in a failure condition;

calculating a user performance score as a function of the user efficiency matrix and the user inefficiency matrix; and

determining a performance level of the user, based on the calculated user performance score.

12. The one or more non-transitory machine-readable information storage mediums of claim 11, wherein result of each of the plurality of user actions associated with the determined state change represents a state.

13. The one or more non-transitory machine-readable information storage mediums of claim 12, wherein the determined state change is identified as an efficient state change if number of states in the determined state change is less than or equal to number of states in the reference state change.

14. The one or more non-transitory machine-readable information storage mediums of claim 12, wherein the determined state change is identified as an inefficient state change if number of states in the determined state change is exceeding number of states in the reference state change.

15. The one or more non-transitory machine-readable information storage mediums of claim 11, wherein a graphical representation of the determined performance level of the user in comparison with performance level of one or more peers is generated.

**Patentansprüche**

1. Prozessorimplementiertes Verfahren (200) zur Benutzerleistungsbewertung, umfassend:

Verfolgen (202), über einen oder mehrere Hardwareprozessoren, einer Mehrzahl von Benutzeraktionen, wenn ein Benutzer an einer Aktivität beteiligt ist, wobei die Mehrzahl von Benutzeraktionen eine Navigation innerhalb einer Anwendung, in der die Aktivität durchgeführt wird, und eine Ausführung einer oder mehrerer Funktionen der Anwendung umfasst; Bestimmen (204), über den einen oder die mehreren Hardwareprozessoren, einer Zustandsänderung, die eine Sequenz einer Durchquerung der Mehrzahl von Benutzeraktionen darstellt, wobei die Zustandsänderung identifiziert wird, wenn die Mehrzahl von Benutzeraktionen durch den Benutzer ausgeführt wird;
Bestimmen (206), über den einen oder die mehreren Hardwareprozessoren, eines Ausmaßes einer Abweichung der bestimmten Zustandsänderung im Vergleich mit einer Referenzzustandsänderung der Anwendung, umfassend:

Vergleichen (206a) der Sequenz einer Durchquerung der Mehrzahl von Benutzeraktionen, die der bestimmten Zustandsänderung entspricht, mit einer Referenzsequenz einer Durchquerung von Benutzeraktionen, die der Referenzzustandsänderung entspricht;
Erzeugen (206b) einer Benutzereffizienzmatrix, wobei die Benutzereffizienzmatrix eine prozentuale Ähnlichkeit der Sequenz einer Durchquerung der Mehrzahl von Benutzeraktionen, die der bestimmten Zustandsänderung entspricht, mit der Referenzsequenz einer Durchquerung der Benutzeraktionen, die der Referenzzustandsänderung entspricht, darstellt; und
Erzeugen (206c) einer Benutzerineffizienzmatrix, wobei die Benutzerineffizienzmatrix a) eine prozentuale Unähnlichkeit der Sequenz einer Durchquerung der Mehrzahl von Benutzeraktionen, die der bestimmten Zustandsänderung entspricht, mit der Referenzsequenz einer Durchquerung der Benutzeraktionen, die der Referenzzustandsänderung entspricht, und b) Instanzen der Benutzeraktivität, die zu einem Fehlerzustand führen, darstellt;

Berechnen (208), über den einen oder die mehreren Hardwareprozessoren, einer Benutzerleistungsbewertung als eine Funktion der Benutzereffizienzmatrix und der Benutzerineffizienzmatrix; und
Bestimmen (210), über den einen oder die mehreren Hardwareprozessoren, eines Leistungsniveaus des Benutzers basierend auf der berechneten Benutzerleistungsbewertung.

2. Verfahren nach Anspruch 1, wobei ein Ergebnis jeder der Mehrzahl von Benutzeraktionen, die der bestimmten Zustandsänderung zugeordnet sind, einen Zustand darstellt.

3. Verfahren nach Anspruch 2, wobei die bestimmte Zustandsänderung als eine effiziente Zustandsänderung identifiziert wird, wenn eine Anzahl von Zuständen in der bestimmten Zustandsänderung kleiner oder gleich einer Anzahl von Zuständen in der Referenzzustandsänderung ist.

4. Verfahren nach Anspruch 2, wobei die bestimmte Zustandsänderung als eine ineffiziente Zustandsänderung identifiziert wird, wenn eine Anzahl von Zuständen in der bestimmten Zustandsänderung eine Anzahl von Zuständen in der Referenzzustandsänderung überschreitet.

5. Verfahren nach Anspruch 1, wobei eine grafische Darstellung des bestimmten Leistungsniveaus des Benutzers im Vergleich mit einem Leistungsniveau von einem oder mehreren Peers erzeugt wird.

6. System (100) zur Benutzerleistungsbewertung, umfassend:

   einen oder mehrere Hardwareprozessoren (102);
   eine Kommunikationsschnittstelle (112); und
   einen Speicher (104), der eine Mehrzahl von Anweisungen speichert, wobei die Mehrzahl von Anweisungen, wenn sie ausgeführt werden, den einen oder die mehreren Hardwareprozessoren zu Folgendem veranlassen:

   Verfolgen einer Mehrzahl von Benutzeraktionen, wenn ein Benutzer an einer Aktivität beteiligt ist, wobei die Mehrzahl von Benutzeraktionen eine Navigation innerhalb einer Anwendung, in der die Aktivität durchgeführt wird, und eine Ausführung einer oder mehrerer Funktionen der Anwendung umfasst;
   Bestimmen einer Zustandsänderung, die eine Sequenz einer Durchquerung der Mehrzahl von Benutzeraktionen darstellt, wobei die Zustandsänderung identifiziert wird, wenn die Mehrzahl von Benutzeraktionen durch den Benutzer ausgeführt wird;
   Bestimmen eines Ausmaßes einer Abweichung der bestimmten Zustandsänderung im Vergleich mit einer Referenzzustandsänderung der Anwendung durch:

   Vergleichen der Sequenz einer Durchquerung der Mehrzahl von Benutzeraktionen, die der bestimmten Zustandsänderung entspricht, mit einer Referenzsequenz einer Durchquerung von Benutzeraktionen, die der Referenzzustandsänderung entspricht;
   Erzeugen einer Benutzereffizienzmatrix, wobei die Benutzereffizienzmatrix eine prozentuale Ähnlichkeit der Sequenz einer Durchquerung der Mehrzahl von Benutzeraktionen, die der bestimmten Zustandsänderung entspricht, mit der Referenzsequenz einer Durchquerung der Benutzeraktionen, die der Referenzzustandsänderung entspricht, darstellt; und
   Erzeugen einer Benutzerineffizienzmatrix, wobei die Benutzerineffizienzmatrix a) eine prozentuale Unähnlichkeit der Sequenz einer Durchquerung der Mehrzahl von Benutzeraktionen, die der bestimmten Zustandsänderung entspricht, mit der Referenzsequenz einer Durchquerung der Benutzeraktionen, die der Referenzzustandsänderung entspricht, und b) Instanzen der Benutzeraktivität, die zu einem Fehlerzustand führen, darstellt;

   Berechnen einer Benutzerleistungsbewertung als eine Funktion der Benutzereffizienzmatrix und der Benutzerineffizienzmatrix; und
   Bestimmen eines Leistungsniveaus des Benutzers basierend auf der berechneten Benutzerleistungsbewertung.

7. System nach Anspruch 6, wobei ein Ergebnis jeder der Mehrzahl von Benutzeraktionen, die der bestimmten Zustandsänderung zugeordnet sind, einen Zustand darstellt.

8. System nach Anspruch 7, wobei der eine oder die mehreren Hardwareprozessoren konfiguriert sind, um die bestimmte Zustandsänderung als eine effiziente Zustandsänderung zu identifizieren, wenn eine Anzahl von Zuständen in der bestimmten Zustandsänderung kleiner oder gleich einer Anzahl von Zuständen in der Referenzzustandsänderung ist.

9. System nach Anspruch 7, wobei der eine oder die mehreren Hardwareprozessoren konfiguriert sind, um die bestimmte Zustandsänderung als eine ineffiziente Zustandsänderung zu identifizieren, wenn eine Anzahl von Zuständen in der bestimmten Zustandsänderung eine Anzahl von Zuständen in der Referenzzustandsänderung überschreitet.

10. System nach Anspruch 6, wobei der eine oder die mehreren Hardwareprozessoren konfiguriert sind, um eine grafische Darstellung des bestimmten Leistungsniveaus des Benutzers im Vergleich mit einem Leistungsniveau von einem oder mehreren Peers zu erzeugen.

11. Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, Folgendes veranlassen:

   Verfolgen einer Mehrzahl von Benutzeraktionen, wenn ein Benutzer an einer Aktivität beteiligt ist, wobei die Mehrzahl von Benutzeraktionen eine Navigation innerhalb einer Anwendung, in der die Aktivität durchgeführt wird, und eine Ausführung einer oder mehrerer Funktionen der Anwendung umfasst;
   Bestimmen einer Zustandsänderung, die eine Sequenz einer Durchquerung der Mehrzahl von Benutzeraktionen darstellt, wobei die Zustandsänderung identifiziert wird, wenn die Mehrzahl von Benutzeraktionen durch den Benutzer ausgeführt wird;
   Bestimmen eines Ausmaßes einer Abweichung der bestimmten Zustandsänderung im Vergleich mit einer Referenzzustandsänderung der Anwendung, umfassend:

      Vergleichen der Sequenz einer Durchquerung der Mehrzahl von Benutzeraktionen, die der bestimmten Zustandsänderung entspricht, mit einer Referenzsequenz einer Durchquerung von Benutzeraktionen, die der Referenzzustandsänderung entspricht;
      Erzeugen einer Benutzereffizienzmatrix, wobei die Benutzereffizienzmatrix eine prozentuale Ähnlichkeit der Sequenz einer Durchquerung der Mehrzahl von Benutzeraktionen, die der bestimmten Zustandsänderung entspricht, mit der Referenzsequenz einer Durchquerung der Benutzeraktionen, die der Referenzzustandsänderung entspricht, darstellt; und
      Erzeugen einer Benutzerineffizienzmatrix, wobei die Benutzerineffizienzmatrix a) eine prozentuale Unähnlichkeit der Sequenz einer Durchquerung der Mehrzahl von Benutzeraktionen, die der bestimmten Zustandsänderung entspricht, mit der Referenzsequenz einer Durchquerung der Benutzeraktionen, die der Referenzzustandsänderung entspricht, und b) Instanzen der Benutzeraktivität, die zu einem Fehlerzustand führen, darstellt;

   Berechnen einer Benutzerleistungsbewertung als eine Funktion der Benutzereffizienzmatrix und der Benutzerineffizienzmatrix; und
   Bestimmen eines Leistungsniveaus des Benutzers basierend auf der berechneten Benutzerleistungsbewertung.

12. Ein oder mehrere nichtflüchtige maschinenlesbare Informationsspeichermedien nach Anspruch 11, wobei ein Ergebnis jeder der Mehrzahl von Benutzeraktionen, die der bestimmten Zustandsänderung zugeordnet sind, einen Zustand darstellt.

13. Ein oder mehrere nichtflüchtige maschinenlesbare Informationsspeichermedien nach Anspruch 12, wobei die bestimmte Zustandsänderung als eine effiziente Zustandsänderung identifiziert wird, wenn eine Anzahl von Zuständen in der bestimmten Zustandsänderung kleiner oder gleich einer Anzahl von Zuständen in der Referenzzustandsänderung ist.

14. Ein oder mehrere nichtflüchtige maschinenlesbare Informationsspeichermedien nach Anspruch 12, wobei die bestimmte Zustandsänderung als eine ineffiziente Zustandsänderung identifiziert wird, wenn eine Anzahl von Zuständen in der bestimmten Zustandsänderung eine Anzahl von Zuständen in der Referenzzustandsänderung überschreitet.

15. Ein oder mehrere nichtflüchtige maschinenlesbare Informationsspeichermedien nach Anspruch 11, wobei eine grafische Darstellung des bestimmten Leistungsniveaus des Benutzers im Vergleich mit einem Leistungsniveau von einem oder mehreren Peers erzeugt wird.

**Revendications**

1. Procédé, mis en oeuvre par processeur (200), d'évaluation de performance d'utilisateur, comprenant le fait de :

   surveiller (202), par l'intermédiaire d'un ou plusieurs processeurs matériels, une pluralité d'actions d'utilisateur lorsqu'un utilisateur est engagé dans une activité, dans laquelle la pluralité d'actions d'utilisateur comprend la navigation dans une application dans laquelle l'activité est mise en oeuvre, et l'exécution d'une ou plusieurs fonctions de l'application ;
   déterminer (204), par l'intermédiaire dudit un ou desdits plusieurs processeurs matériels, un changement d'état représentant une séquence de parcours de la pluralité d'actions d'utilisateur, dans lequel le changement d'état est identifié lorsque la pluralité d'actions d'utilisateur est exécutée par l'utilisateur ;
   déterminer (206), par l'intermédiaire dudit un ou desdits plusieurs processeurs matériels, l'ampleur d'un écart du changement d'état déterminé par rapport à un changement d'état de référence de l'application, comprenant le fait de :

   comparer (206a) la séquence de parcours de la pluralité d'actions d'utilisateur correspondant au changement d'état déterminé à une séquence de référence de parcours d'actions d'utilisateur correspondant au changement d'état de référence ;
   générer (206b) une matrice d'efficacité d'utilisateur, dans laquelle la matrice d'efficacité d'utilisateur représente un pourcentage de similarité entre la séquence de parcours de la pluralité d'actions d'utilisateur correspondant au changement d'état déterminé et la séquence de référence de parcours des actions d'utilisateur correspondant au changement d'état de référence ; et
   générer (206c) une matrice d'inefficacité d'utilisateur, dans laquelle la matrice d'inefficacité d'utilisateur représente a) un pourcentage de dissimilarité entre la séquence de parcours de la pluralité d'actions d'utilisateur correspondant au changement d'état déterminé et la séquence de référence de parcours des actions d'utilisateur correspondant au changement d'état de référence, et b) des instances de l'activité d'utilisateur entraînant une condition de défaillance ;

   calculer (208), par l'intermédiaire dudit un ou desdits plusieurs processeurs matériels, un score de performance d'utilisateur en fonction de la matrice d'efficacité d'utilisateur et de la matrice d'inefficacité d'utilisateur ; et
   déterminer (210), par l'intermédiaire dudit un ou desdits plusieurs processeurs matériels, un niveau de performance de l'utilisateur, sur la base du score de performance d'utilisateur calculé.

2. Procédé selon la revendication 1, dans lequel le résultat de chacune de la pluralité d'actions d'utilisateur associées au changement d'état déterminé représente un état.

3. Procédé selon la revendication 2, dans lequel le changement d'état déterminé est identifié en tant qu'un changement d'état efficace si le nombre d'états dans le changement d'état déterminé est inférieur ou égal au nombre d'états dans le changement d'état de référence.

4. Procédé selon la revendication 2, dans lequel le changement d'état déterminé est identifié en tant qu'un changement d'état inefficace si le nombre d'états dans le changement d'état déterminé est supérieur au nombre d'états dans le changement d'état de référence.

5. Procédé selon la revendication 1, dans lequel une représentation graphique du niveau de performance déterminé de l'utilisateur par rapport au niveau de performance d'un ou plusieurs pairs est générée.

6. Système (100) d'évaluation de performance d'utilisateur, comprenant :

   un ou plusieurs processeurs matériels (102) ;
   une interface de communication (112) ; et
   une mémoire (104) stockant une pluralité d'instructions, dans laquelle les instructions de la pluralité d'instructions, lorsqu'elles sont exécutées, amènent ledit un ou lesdits plusieurs processeurs matériels à :

   surveiller une pluralité d'actions d'utilisateur lorsqu'un utilisateur est engagé dans une activité, dans laquelle la pluralité d'actions d'utilisateur comprend la navigation dans une application dans laquelle l'activité est mise en oeuvre, et l'exécution d'une ou plusieurs fonctions de l'application ;
   déterminer un changement d'état représentant une séquence de parcours de la pluralité d'actions d'utilisateur, dans lequel le changement d'état est identifié lorsque la pluralité d'actions d'utilisateur est exécutée par l'utilisateur ;

déterminer l'ampleur d'un écart du changement d'état déterminé par rapport à un changement d'état de référence de l'application, en :

comparant la séquence de parcours de la pluralité d'actions d'utilisateur correspondant au changement d'état déterminé à une séquence de référence de parcours d'actions d'utilisateur correspondant au changement d'état de référence ;

générant une matrice d'efficacité d'utilisateur, dans laquelle la matrice d'efficacité d'utilisateur représente un pourcentage de similarité entre la séquence de parcours de la pluralité d'actions d'utilisateur correspondant au changement d'état déterminé et la séquence de référence de parcours des actions d'utilisateur correspondant au changement d'état de référence ; et

générant une matrice d'inefficacité d'utilisateur, dans laquelle la matrice d'inefficacité d'utilisateur représente a) un pourcentage de dissimilarité entre la séquence de parcours de la pluralité d'actions d'utilisateur correspondant au changement d'état déterminé et la séquence de référence de parcours des actions d'utilisateur correspondant au changement d'état de référence, et b) des instances de l'activité d'utilisateur entraînant une condition de défaillance ;

calculer un score de performance d'utilisateur en fonction de la matrice d'efficacité d'utilisateur et de la matrice d'inefficacité d'utilisateur ; et

déterminer un niveau de performance de l'utilisateur, sur la base du score de performance d'utilisateur calculé.

7. Système selon la revendication 6, dans lequel le résultat de chacune de la pluralité d'actions d'utilisateur associées au changement d'état déterminé représente un état.

8. Système selon la revendication 7, dans lequel ledit un ou lesdits plusieurs processeurs matériels sont configurés de manière à identifier le changement d'état déterminé en tant qu'un changement d'état efficace si le nombre d'états dans le changement d'état déterminé est inférieur ou égal au nombre d'états dans le changement d'état de référence.

9. Système selon la revendication 7, dans lequel ledit un ou lesdits plusieurs processeurs matériels sont configurés de manière à identifier le changement d'état déterminé en tant qu'un changement d'état inefficace si le nombre d'états dans le changement d'état déterminé est supérieur au nombre d'états dans le changement d'état de référence.

10. Système selon la revendication 6, dans lequel ledit un ou lesdits plusieurs processeurs matériels sont configurés de manière à générer une représentation graphique du niveau de performance déterminé de l'utilisateur par rapport au niveau de performance d'un ou plusieurs pairs.

11. Un ou plusieurs supports non transitoires de stockage d'informations lisibles par machine comprenant une ou plusieurs instructions qui, lorsqu'elles sont exécutées par un ou plusieurs processeurs matériels, entraînent le fait de :

surveiller une pluralité d'actions d'utilisateur lorsqu'un utilisateur est engagé dans une activité, dans laquelle la pluralité d'actions d'utilisateur comprend la navigation dans une application dans laquelle l'activité est mise en oeuvre, et l'exécution d'une ou plusieurs fonctions de l'application ;

déterminer un changement d'état représentant une séquence de parcours de la pluralité d'actions d'utilisateur, dans lequel le changement d'état est identifié lorsque la pluralité d'actions d'utilisateur est exécutée par l'utilisateur ;

déterminer l'ampleur d'un écart du changement d'état déterminé par rapport à un changement d'état de référence de l'application, comprenant le fait de :

comparer la séquence de parcours de la pluralité d'actions d'utilisateur correspondant au changement d'état déterminé à une séquence de référence de parcours d'actions d'utilisateur correspondant au changement d'état de référence ;

générer une matrice d'efficacité d'utilisateur, dans laquelle la matrice d'efficacité d'utilisateur représente un pourcentage de similarité entre la séquence de parcours de la pluralité d'actions d'utilisateur correspondant au changement d'état déterminé et la séquence de référence de parcours des actions d'utilisateur correspondant au changement d'état de référence ; et

générer une matrice d'inefficacité d'utilisateur, dans laquelle la matrice d'inefficacité d'utilisateur représente a) un pourcentage de dissimilarité entre la séquence de parcours de la pluralité d'actions d'utilisateur correspondant au changement d'état déterminé et la séquence de référence de parcours des actions d'utilisateur correspondant au changement d'état de référence, et b) des instances de l'activité d'utilisateur entraînant une condition de défaillance ;

calculer un score de performance d'utilisateur en fonction de la matrice d'efficacité d'utilisateur et de la matrice d'inefficacité d'utilisateur ; et
déterminer un niveau de performance de l'utilisateur, sur la base du score de performance d'utilisateur calculé.

12. Ledit un ou lesdits plusieurs supports non transitoires de stockage d'informations lisibles par machine selon la revendication 11, dans lesquels le résultat de chacune de la pluralité d'actions d'utilisateur associées au changement d'état déterminé représente un état.

13. Ledit un ou lesdits plusieurs supports non transitoires de stockage d'informations lisibles par machine selon la revendication 12, dans lesquels le changement d'état déterminé est identifié en tant qu'un changement d'état efficace si le nombre d'états dans le changement d'état déterminé est inférieur ou égal au nombre d'états dans le changement d'état de référence.

14. Ledit un ou lesdits plusieurs supports non transitoires de stockage d'informations lisibles par machine selon la revendication 12, dans lesquels le changement d'état déterminé est identifié en tant qu'un changement d'état inefficace si le nombre d'états dans le changement d'état déterminé est supérieur au nombre d'états dans le changement d'état de référence.

15. Ledit un ou lesdits plusieurs supports non transitoires de stockage d'informations lisibles par machine selon la revendication 11, dans lesquels une représentation graphique du niveau de performance déterminé de l'utilisateur par rapport au niveau de performance d'un ou plusieurs pairs est générée.

100

108

MEMORY 104

MODULES 106

REPOSITORY 110

I/O INTERFACE
112

HARDWARE
PROCESSORS
102

FIG. 1

tracking, via one or more hardware processors, a plurality of user actions when the user is engaged in an activity, wherein the plurality of user actions comprise navigation within an application in which the activity is being performed, and execution of one or more functions of the application

202

determining, via the one or more hardware processors, a state change representing a sequence of traversal of the plurality of user actions, wherein the state change is identified when the plurality of user actions is executed by the user

204

206

comparing the sequence of traversal of the plurality of user actions corresponding to the determined state change with a reference sequence of traversal of user actions corresponding to the reference state change

206a

generating a user efficiency matrix, wherein the user efficiency matrix represents a percentage similarity of the sequence of traversal of the plurality of user actions corresponding to the determined state change with the reference sequence of traversal of the user actions corresponding to the reference state change

206b

generating a user inefficiency matrix, wherein the user inefficiency matrix represents a) a percentage dissimilarity of the sequence of traversal of the plurality of user actions corresponding to the determined state change with the reference sequence of traversal of the user actions corresponding to the reference state change, and b) instances of the user activity resulting in a failure condition

206c

A

200

FIG. 2A

A

calculating, via the one or more hardware processors, a user performance score as a function of the user efficiency matrix and the user inefficiency matrix

208

determining, via the one or more hardware processors, a performance level of the user, based on the calculated user performance score

210

200

FIG. 2B

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221029544

- US 2020026502 A